# EUROPEAN PATENT APPLICATION

(11) **EP 3 214 851 A1**
(43) Date of publication of application: **06.09.2017**
(21) Application number: 15855120.0
(22) Date of filing: 07.09.2015
(51) Int. Cl.: H04R 1/10, H04R 5/033

(54) **ACOUSTIC OUTPUT DEVICE**

(30) Priority: 30.10.2014 JP 2014221386
(71) Applicant: Sony Corporation, Tokyo 108-0075 (JP)
(72) Inventor: MIHARA, Ryota, Tokyo 108-0075 (JP); YOSHINO, Masaharu, Tokyo 108-0075 (JP)
(74) Representative: D Young & Co LLP
(86) International application number: PCT/JP2015/075362
(87) International publication number: WO 2016/067754

(57) **Abstract**

Favorable recognizability of audio output from a sound output device and external sound is secured, and discomfort caused in a mounted state is reduced.

The sound output device includes: a housing in which a speaker is arranged; and a sound introduction hook in which an internal space is provided as a sound introduction space for introducing audio output from the speaker, one end portion is connected to the housing, and audio introduced through the sound introduction space is emitted through an opening of the other end portion, the sound introduction hook is mounted on a root portion of an auricle, and the other end portion of the sound introduction hook is not in contact with an ear. With this, audio output from the speaker is transmitted to a user via the sound introduction hook, and the sound introduction hook is mounted in a state in which the other end portion having the opening through which audio is emitted is not in contact with the ear. Therefore, it is possible to secure favorable recognizability of audio output from the sound output device and external sound and reduce discomfort caused in a mounted state.

## Description

### TECHNICAL FIELD

The present technology relates to a technical field regarding a sound output device in which speakers are arranged and which is mounted on ears to be used.

### CITATION LIST

### PATENT DOCUMENT

Patent Document 1: Japanese Patent Application Laid-Open No. 2004-208220
Patent Document 2: Japanese Patent Application Laid-Open No. 2014-96739

### BACKGROUND ART

There is a sound output device that is mounted on a head to be used as a headphone or earphone and outputs audio from speakers.

In recent years, the sound output device has been increasingly used not only in a room but also outside a room. In a case where the sound output device is used outside a room, it is desirable that a user can hear both audio output from the sound output device and external sound in consideration of not only safety of the user but also safety of pedestrians, drivers, and the like existing in the vicinity of the user.

Various sound output devices have been developed as a sound output device that can hear both audio output from the sound output device and external sound (see, for example, Patent Document 1 and Patent Document 2).

In a sound output device disclosed in Patent Document 1, a vibration element is arranged in a housing as a driver for outputting audio, and the sound output device is configured to recognize audio in such a manner that vibration generated in the vibration element is transmitted to an ear bone existing on the periphery of an external auditory meatus and is transmitted to a brain from the ear bone through a skull and the like.

A through hole penetrating the housing and a vibrator is provided in this sound output device, and external sound is transmitted to a user through the through hole without blocking vibration of the vibrator.

A sound output device disclosed in Patent document 2 is such that: a housing is made up of an insertion unit and a transmission member; an electroacoustic transducer element and a vibrator are arranged in the transmission member as a driver for outputting audio; and a plug movable inside and outside the insertion unit is provided. In the insertion unit, a through hole that allows hearing of external sound is provided.

This sound output device is mounted on an ear in a state in which a part of the insertion unit is inserted into an external auditory meatus and the transmission member is in contact with a tragus and an antitragus in front of the insertion unit. Audio is recognized in such a manner that vibration generated in the electroacoustic transducer element is transmitted from the vibrator to the transmission member and the transmitted vibration is transmitted from an ear bone to a brain through a skull and the like. External sound is vibrated into a space between the plug and an eardrum to be transmitted to a user, and it is possible to cause external sound to be differently heard by moving the plug at this time.

### SUMMARY OF THE INVENTION

### PROBLEMS TO BE SOLVED BY THE INVENTION

As described above, in the sound output devices disclosed in Patent Document 1 and Patent Document 2, a so-called bone conduction method in which vibration is transmitted to an ear bone to thereby recognize audio is employed. However, in the sound output devices of the bone conduction method, reproducibility of a lower frequency band in an audio region is low and therefore it is difficult to hear a low-pitched sound.

In order to improve the reproducibility of the lower frequency band, it is considered that a dynamic driver is used as a driver for outputting audio. However, when such a driver is positioned in front of an auricle, external sound is differently heard due to a change in head-related transfer function. Thus, it may be difficult to accurately recognize a generation direction or generation position of external sound.

Further, in a sound output device at least a part of which is inserted into an external auditory meatus to be used, reproducibility of a low-pitched sound is reduced, and the head-related transfer function is changed because the external auditory meatus is blocked, so that it may be difficult to accurately recognize external sound.

Furthermore, in a case of a sound output device at least a part of which is inserted into an external auditory meatus or a part of which is brought into contact with a tragus or the like, in some cases, discomfort is felt in a state in which the sound output device is mounted.

In view of this, a sound output device of the present technology has solved the above problems, and an object thereof is to secure favorable recognizability of audio output from the sound output device and external sound and/or reduce discomfort caused in a mounted state.

### SOLUTIONS TO PROBLEMS

First, a sound output device according to the present technology includes : a housing in which a speaker is arranged; and a sound introduction hook in which an internal space is provided as a sound introduction space for introducing audio output from the speaker, one end portion is connected to the housing, and audio introduced through the sound introduction space is emitted through an opening of the other end portion, wherein the sound introduction hook is mounted on a root portion of an auricle, and the other end portion of the sound introduction hook is not in contact with an ear.

With this, audio output from the speaker is transmitted to a user via the sound introduction hook, and the sound introduction hook is mounted in a state in which the other end portion having the opening through which audio is emitted is not in contact with an ear.

Second, in the sound output device, it is desirable that the opening is positioned in an internal space of the auricle.

With this, the opening is positioned in the vicinity of an external auditory meatus.

Third, in the sound output device, it is desirable that the opening is positioned at a cavum conchae.

With this, the opening is positioned in the vicinity of the external auditory meatus.

Fourth, in the sound output device, it is desirable that the opening is positioned at an external auditory meatus.

With this, the opening is positioned in the vicinity of an eardrum.

Fifth, in the sound output device, it is desirable that the housing is positioned behind the auricle in a state in which the housing is in contact with a head.

With this, the sound output device is mounted on the ear in a state in which the sound introduction hook and the housing are in contact with the head.

Sixth, in the sound output device, it is desirable that the one end portion is positioned behind the auricle and the other end portion is positioned in front of the one endportion.

With this, the housing is positioned behind the auricle.

Seventh, in the sound output device, it is desirable that the sound introduction hook is rotatable with respect to the housing around an axis of the housing.

With this, it is possible to adjust a position of the sound introduction hook depending on a shape or size of the ear when the sound introduction hook is mounted on the ear.

Eighth, in the sound output device, it is desirable that the sound introduction hook is bendable.

With this, it is possible to change a shape of the sound introduction hook in accordance with the shape or size of the ear when the sound introduction hook is mounted on the ear.

Ninth, in the sound output device, it is desirable that the sound introduction hook is bent in a direction in which the other end portion is closer to the external auditory meatus than the other portions.

With this, when the sound introduction hook is mounted on the ear, a position at which audio is emitted spontaneously exists in the vicinity of the external auditory meatus.

Tenth, in the sound output device, it is desirable that the sound introduction hook is inclined to a temporal region side from the housing.

With this, when the sound introduction hook is mounted on the ear, the sound introduction hook is in contact with a temporal region.

Eleventh, in the sound output device, it is desirable that a pair of the housings and a pair of the sound introduction hooks are provided, and the speaker is arranged in each of the pair of the housings.

With this, the sound output device functions as a stereotype and a balance favorable in terms of weight is secured between the pair of housings.

Twelfth, in the sound output device, it is desirable that a circuit board is arranged in one of the housings, and a battery is arranged in the other one of the housings.

With this, a difference between weights of both portions of the sound output device, the both portions being mounted on ears, is reduced, and a balance favorable in terms of weight is secured.

Thirteenth, in the sound output device, it is desirable that a cable is connected between the pair of the housings.

With this, transmission of audio signals and supply of a current to both speakers can be performed by the cable.

Fourteenth, in the sound output device, it is desirable that the single housing and the single sound introduction hook are provided, and a battery is arranged in the housing.

With this, it is possible to mount the sound introduction hook on one ear to use the sound output device.

Fifteenth, in the sound output device, it is desirable that, in a case where the sound output device is mounted on a user, at least a part of the housing is positioned behind the auricle on a side of an earlobe.

With this, the housing is positioned behind the auricle on a lower end side of the ear.

Sixteenth, in the sound output device, it is desirable that, in a case where the sound output device is mounted on a user, at least a part of the housing is positioned behind the auricle below a lower end of an earlobe.

With this, the housing is positioned behind the auricle on the lower end side of the ear.

### EFFECTS OF THE INVENTION

According to the present technology, audio output from a speaker is transmitted to a user via a sound introduction hook, and the sound introduction hook is mounted in a state in which the other end portion having an opening through which audio is emitted is not in contact with an ear. Therefore, it is possible to secure favorable recognizability of audio output from the sound output device and external sound and reduce discomfort caused in a mounted state.

Note that effects described in the present specification are merely examples and are not limited and other effects may be exerted.

### BRIEF DESCRIPTION OF DRAWINGS

Fig. 1, as well as Fig. 2 to Fig. 10, illustrates an embodiment of a sound output device of the present technology, and Fig. 1 is a front view of an ear on which the sound output device is mounted.
Fig. 2 is a cross-sectional view taken along the line II-II in Fig. 1.
Fig. 3 is a perspective view of the sound output device.
Fig. 4 is a front view of the sound output device a part of which is illustrated as a cross-sectional view.
Fig. 5 is a rear view illustrating a state in which the sound output device is mounted on the ear.
Fig. 6 is a front view illustrating a state in which the sound output device is mounted on an ear and an opening of a sound introduction hook is positioned at an external auditory meatus, a part of the state being illustrated as a cross-sectional view.
Fig. 7 is a cross-sectional view illustrating a state in which the opening of the sound introduction hook is positioned at the external auditory meatus.
Fig. 8 is a front view illustrating a state in which the sound output device is mounted on an ear and the opening of the sound introduction hook is positioned at a cavum conchae, a part of the state being illustrated as a cross-sectional view.
Fig. 9 is a front view illustrating a state in which the sound output device is mounted on an ear and the opening of the sound introduction hook is positioned away from an external auditory meatus and a cavum conchae in an internal space of an auricle, a part of the state being illustrated as a cross-sectional view.
Fig. 10 is a perspective view illustrating another example of the sound output device.

### MODE FOR CARRYING OUT THE INVENTION

Hereinafter, a form for implementing a sound output device of the present technology will be described with reference to the attached drawings.

In an embodiment describedbelow, the sound output device of the present technology is applied to an earphone. However, an application range of the present technology is not limited to the earphone but is widely applicable to various other sound output devices such as a headphone.

### [Structure of Ear]

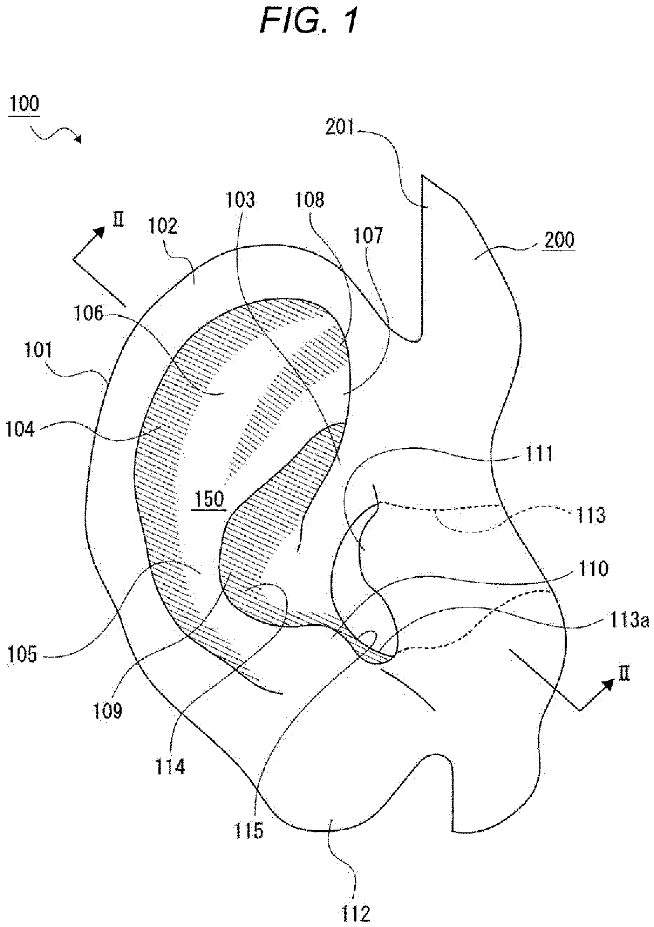

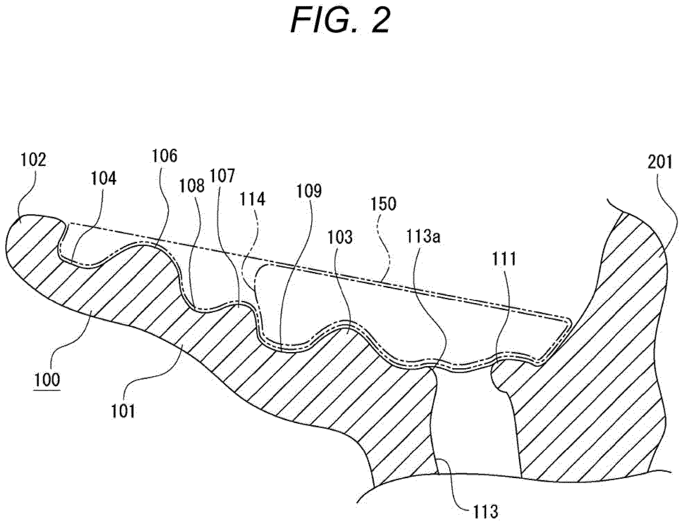

A structure of an ear on which the sound output device is mounted will be described (see Fig. 1 and Fig. 2).

Ears 100 and 100 are part of a head 200 and are made up of auricles 101 and 101 and parts existing in the head 200 such as eardrums, semicircular canals, and cochleae. Portions of the head 200 on the inside of the auricles 101 and 101 are temporal regions 201 and 201, respectively, and the auricles 101 and 101 are projected from the temporal regions 201 and 201 to a left side or a right side.

The auricle 101 has a shallow recessed shape open in a substantially forward direction as a whole so as to have an internal space 150, and a peripheral portion has a portion called "helix 102" and a portion called "crus of helix 103" continued to the helix 102 and positioned in the vicinity of the temporal region 201.

A portion on the inside of the helix 102 is called "scaphoid fossa 104" having a recessed shape, and a substantially lower half portion on the inside of the scaphoid fossa 104 is called "antihelix 105" having a projected shape. A portion continuedto the antihelix 105 and having abifurcated and projected shape exists above the antihelix 105, and a portion on the outside of the bifurcating portion and a portion on the inside of the bifurcating portion are called "superior crus of antihelix 106" and "inferior crus of antihelix 107", respectively. A portion between the superior crus of antihelix 106 and the inferior crus of antihelix 107 is called "triangular fossa 108" having a recessed shape, and a portion on the inside of the antihelix 105 and the inferior crus of antihelix 107 is called "cymba conchae 109" having a recessed shape.

A portion continued to a lower side of the antihelix 105 slightly bulges to the temporal region 201 side and is a portion called "antitragus 110". A portion on the temporal region 201 side, the portion facing the antitragus 110, is called "tragus 111" that slightly bulges to the antitragus 110 side, and a lower end portion continued to a lower side of the helix 102 is called "earlobe 112".

An external acoustic meatus 113a serving as an entrance of an external auditory meatus 113 exists in a portion between the antitragus 110 and the tragus 111, and the external auditory meatus 113 communicates with the eardrum, the semicircular canals, and the like. A space surrounded by the antihelix 105, the inferior crus of antihelix 107, and the crus of helix 103 in the internal space 150 of the auricle 101, i.e., a space in front of the cymba conchae 109 is called "cavum conchae 114" and communicates with the external acoustic meatus 113a of the external auditory meatus 113. A space that is continued to a lower side of the cavum conchae 114 in the internal space 150 and is open to have a U shape is a space called "intertragic notch 115".

The internal space 150 of the auricle 101 is a space including a space near the cavum conchae 114, the intertragic notch 115, and the external acoustic meatus 113a of the external auditory meatus 113 and also including a space in front of the scaphoid fossa 104, the antihelix 105, the superior crus of antihelix 106, the inferior crus of antihelix 107, the triangular fossa 108, the antitragus 110, and the tragus 111.

### [Schematic Configuration of Sound Output Device]

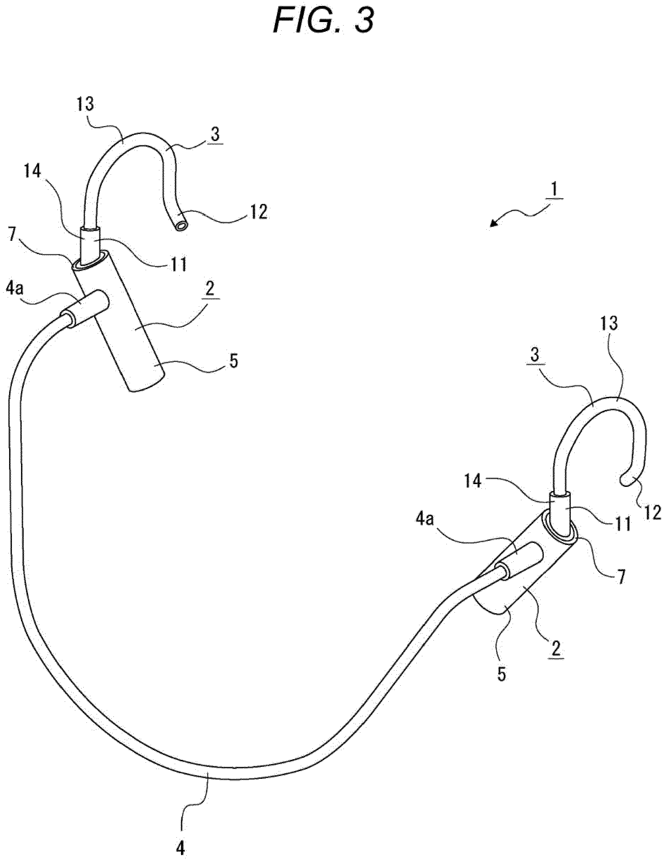

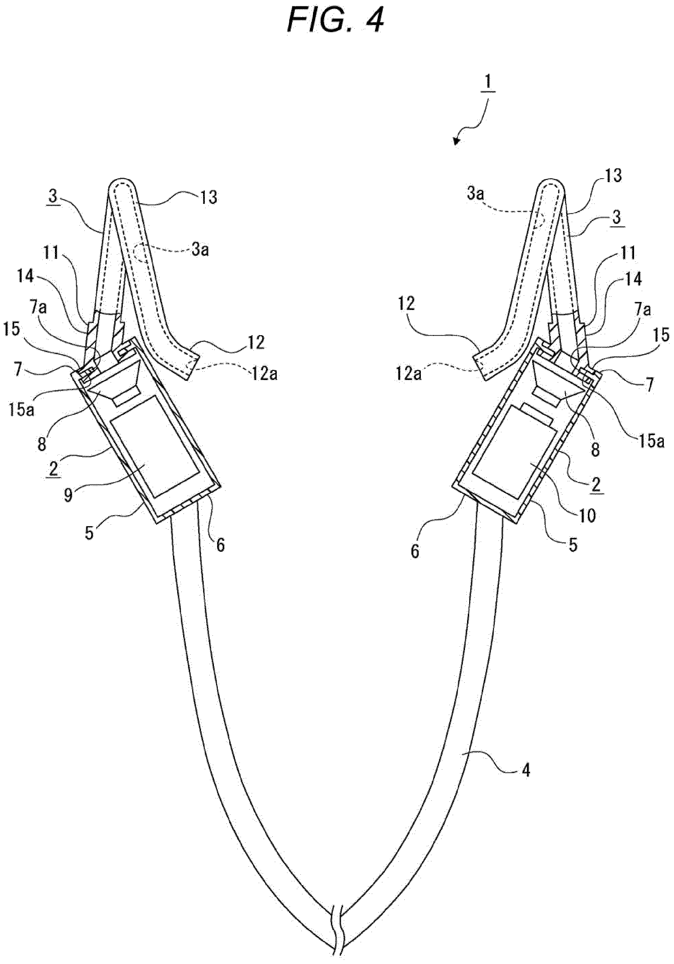

Next, a configuration of the sound output device will be described (see Fig. 3 and Fig. 4).

A sound output device 1 includes housings 2 and 2, sound introduction hooks 3 and 3, and a cable 4.

The cable 4 is connected between the housings 2 and 2. The housing 2 is, for example, a tubular portion 5 having a cylindrical shape, a bottom surface portion 6 for blocking one end portion in an axial direction of the tubular portion 5, and a cover portion 7 for blocking the other end portion in the axial direction of the tubular portion 5. An insertion hole 7a penetrating in the axial direction of the tubular portion 5 is provided in the cover portion 7.

The speakers 8 and 8 are arranged in the housings 2 and 2, respectively (see Fig. 4). As the speaker 8, for example, a dynamic driver unit may be employed.

The speaker 8 and a circuit board 9 are arranged in one housing 2, and a drive circuit for operating the speakers 8 and 8 and a communication circuit for wireless communication are provided in the circuit board 9. Therefore, the sound output device 1 can receive audio signals from another apparatus such as a music player via wireless communication, convert the received audio signals, and output the received audio signals from the speakers 8 and 8 as audio and can perform pairing processing such as connection authentication with the music player. The wireless communication for receiving audio signals may correspond to, for example, short-range wireless communication such as Bluetooth, wireless fidelity (WiFi), and near field communication (NFC) serving as wireless communication for pairing processing such as connection authentication.

The speaker 8 and a battery 10 are arranged in the other housing 2. The battery 10 may be a disposable battery or rechargeable battery. In particular, in a case where the battery 10 is a disposable battery, it is desirable that a part of the housing 2 can be open/closed and the battery 10 can be replaced. Further, also in a case where the battery 10 is a rechargeable battery, a part of the housing 2 may be open/closed and the battery 10 may be replaced.

Power of the battery 10 is supplied to the speakers 8 and 8 and the circuit board 9 to operate the speakers 8 and 8 and the circuit board 9. Supply of power from the battery 10 to the speaker 8 and the circuit board 9 arranged in the one housing 2 is performed via the cable 4.

Therefore, an electrical wire for supplying power is provided in the cable 4. Further, a signal wire for transmitting/receiving audio signals and various other signals is also provided in the cable 4, and, for example, output of audio signals from the circuit board 9 arranged in the one housing 2 to the speaker 8 arranged in the other housing 2 is performed by the signal wire.

Both end portions of the cable 4 are connected to the portions arranged in the housings 2 and 2 via the tubular portions 5 and 5 of the housings 2 and 2. Connection tubular portions 4a and 4a having a larger diameter than that of the other portion are provided in the both end portions of the cable 4 (see Fig. 3), and the connection tubular portions 4a and 4 a are connected to outer peripheral surfaces of the tubular portions 5 and 5, respectively. Rigidity of the both end portions of the cable 4 is increased by the connection tubular portions 4a and 4a, and therefore a stable connection state of the cable 4 to the tubular portions 5 and 5 is secured.

Note that, for example, various connection terminals such as a universal serial bus (USB) terminal and a charging terminal, an audio input hole for a microphone, and the like may be provided in one or both of the housings 2 and 2. In a case where a connection terminal is provided in the housing 2, a circuit corresponding to the connection terminal is arranged in the housing 2 in which the connection terminal is provided. Further, in a case where an audio input hole for a microphone is provided in the housing 2, a microphone is arranged in the housing 2 in which the audio input hole is provided.

The sound introduction hook 3 is configured by covering, for example, an outer peripheral surface of a tubular portion made of a metal material such as aluminum with a portion made of a rubber material such as silicon or a resin material. Because a portion on an inner peripheral side of the sound introduction hook 3 is made of a metal material, audio output from the speaker 8 is efficiently transmitted through the inside of the sound introduction hook 3 without reducing quality thereof. In particular, the sound introduction hook 3 is a portion mounted on an ear 100 of a user and aluminum is used as a metal material, and therefore a weight of the sound introduction hook 3 is reduced. Thus, a load applied to the user when the sound introduction hook 3 is mounted on the ear 100 is reduced, and it is possible to secure a favorable wearing feeling of the sound output device 1.

Further, because a portion on an outer peripheral side of the sound introduction hook 3 is made of a rubber material or resin material, the sound introduction hook 3 is mounted in a state in which the sound introduction hook 3 fits the ear 100, and therefore it is possible to secure a favorable wearing feeling of the sound output device 1.

Note that, in the above description, there has been described an example where the sound introduction hook 3 has a two-layer structure having the portion on the inner peripheral side and the portion on the outer peripheral side. However, the sound introduction hook 3 may be a single-layer structure or a structure of three or more layers. In a case where the sound introduction hook 3 has, for example, a single-layer structure, any of a metal material, a rubber material, and a resin material may be used as a material from which the sound introduction hook 3 is made.

An internal space of the sound introduction hook 3 is a sound introduction space 3a for introducing audio output from the speaker 8 (see Fig. 4). As illustrated in Fig. 3 and Fig. 4, one end portion of the sound introduction hook 3 is provided as a connection portion 11, whereas the other end portion thereof is provided as a bending portion 12, and a portion between the connection portion 11 and the bending portion 12 is provided as an intermediate portion 13.

The connection portion 11 is made up of a cylindrical base 14 whose diameter is one size larger than those of the bending portion 12 and the intermediate portion 13 and a connection plate portion 15 continued to an end surface of the base 14, the end surface being provided on a side opposite to a side on which the intermediate portion 13 is provided. The connection plate portion 15 is a thin and substantially circular portion and has a circular supported groove 15a that is open outward.

As described above, in the sound introduction hook 3, the diameter of the base 14 is one size larger than those of the bending portion 12 and the intermediate portion 13, and therefore rigidity of a portion connected to the housing 2 is increased, and a stable connection state of the sound introduction hook 3 to the housing 2 is secured.

A part of the cover portion 7 of the housing 2 is inserted into the supported groove 15a of the connection plate portion 15, and therefore the sound introduction hook 3 is rotatable with respect to the housing 2 around an axis thereof. Note that a certain friction acts on a space between the cover portion 7 and the connection plate portion 15, and therefore, when the sound introduction hook 3 is rotated with respect to the housing 2, the sound introduction hook 3 is held at a position at which the sound introduction hook 3 is rotated with respect to the housing 2 and is stopped.

The base 14 of the connection portion 11 in the sound introduction hook 3 is inclined from the axial direction of the tubular portion 5 in the housing 2 (see Fig. 4). The base 14 is inclined to the temporal region 201 side from the axial direction of the tubular portion 5 in a state in which the sound introduction hook 3 is mounted on the ear 100.

The bending portion 12 is bent from the intermediate portion 13, and, in a state in which the sound introduction hook 3 is mounted on the ear 100, the bending portion 12 is inclined in a direction in which the bending portion 12 is closer to the temporal region 201 as the bending portion 12 is further away from the intermediate portion 13. The bending portion 12 is a portion positioned closest to the external auditory meatus 113 in a state in which the sound introduction hook 3 is mounted on the ear 100. Audio output from the speaker 8 to be introduced through the sound introduction space 3a is emitted through a tip opening 12a of the bending portion 12.

The intermediate portion 13 has a curved shape as a whole and is inclined from the axial direction of the tubular portion 5 in the same direction and at the same angle as the base 14. Therefore, in a state in which the sound introduction hook 3 is mounted on the ear 100, the intermediate portion 13 is inclined in a direction in which the intermediate portion 13 is closer to the temporal region 201 as the intermediate portion 13 is closer to the bending portion 12.

Note that the sound introduction hook 3 may have a bendable structure. Because the sound introduction hook 3 is bendable, it is possible to change the shape of the sound introduction hook 3 in accordance with a shape or size of the ear 100 when the sound introduction hook 3 is mounted on the ear 100. Therefore, it is possible to stably mount the sound output device 1 on the ear 100 and position the bending portion 12 positioned closest to the external auditory meatus 113 at a desired position at which audio can be easily heard.

In a case where the sound introduction hook 3 has a bendable structure, it is desirable to hold a bended shape of the sound introduction hook 3.

Further, because the sound introduction hook 3 is rotatable with respect to the housing 2 around the axis thereof, the sound output device 1 can adjust a position of the sound introduction hook 3 depending on the shape or size of the ear 100 when the sound output device 1 is mounted on the ear 100, and therefore it is possible to stably mount the sound output device 1 on the ear 100 and position the bending portion 12 at a desired position at which audio can be easily heard.

As described above, the sound output device 1 includes the pair of the housings 2 and 2 and the pair of the sound introduction hooks 3 and 3, and the speakers 8 and 8 are arranged in the housings 2 and 2, respectively.

Therefore, the sound output device 1 functions as a stereotype and functionality of the sound output device 1 is improved, and therefore it is possible to hear high quality audio. Further, the speakers 8 and 8 are arranged in the housings 2 and 2, respectively, and a balance favorable in terms of weight is secured, and therefore it is possible to stably mount the sound output device 1 on the ear 100.

Further, in the sound output device 1, the circuit board 9 is arranged in the one housing 2, and the battery 10 is arranged in the other housing 2. Therefore, a difference in weight between portions on both sides of the sound output device 1, the portions being mounted on the ears 100 and 100, is reduced and a balance favorable in terms of weight is secured, and therefore it is possible to stably mount the sound output device 1 on the ear 100.

Furthermore, the housings 2 and 2 are connected by the cable 4, and therefore transmission of audio signals and supply of a current to both the speakers 8 and 8 can be performed by the cable 4 and favorable functionality of the sound output device 1 can be secured.

### [Mounted State of Sound Output Device to Ear]

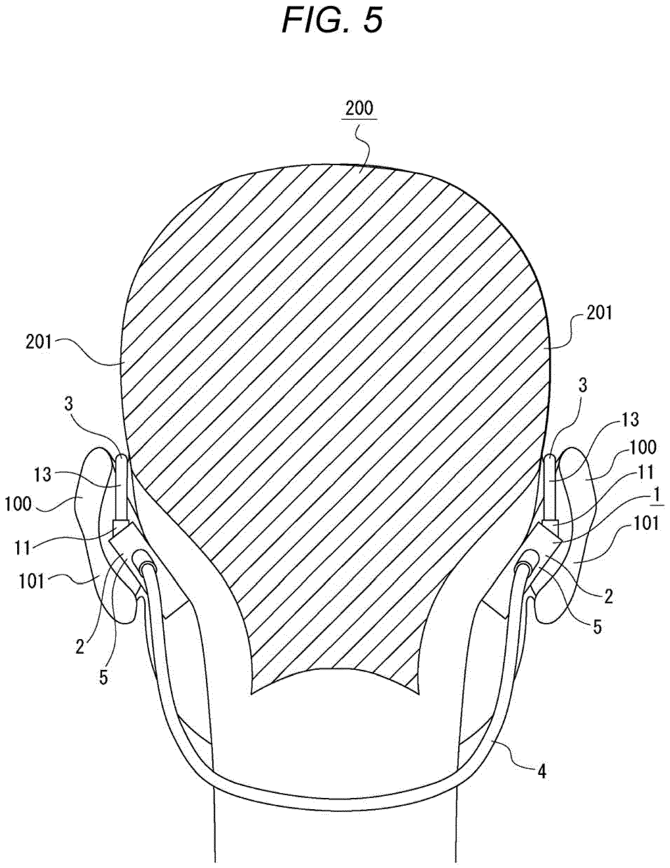

Hereinafter, a mounted state of the sound output device 1 to the ears 100 and 100 will be described (see Fig. 5 to Fig. 9).

The housings 2 and 2 of the sound output device 1 are pushed against root portions of the auricles 101 and 101 of the head 200, respectively, i.e., boundary portions between the auricles 101 and 101 and the temporal regions 201 and 201 or portions in the vicinity thereof, respectively, from back sides of the auricles 101 and 101 (see Fig. 5). The cable 4 is positioned behind the head 200.

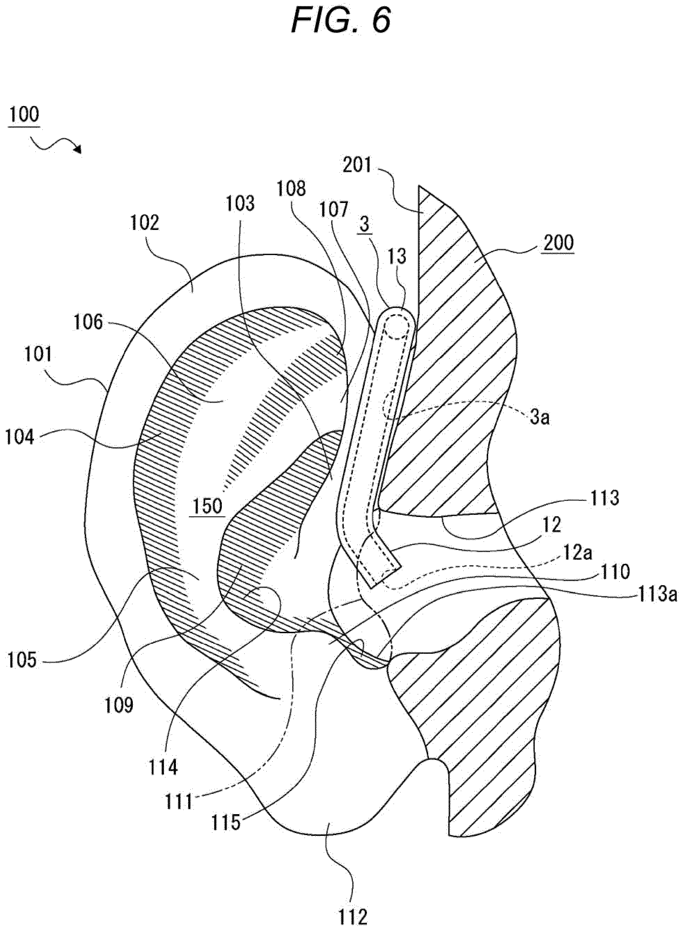

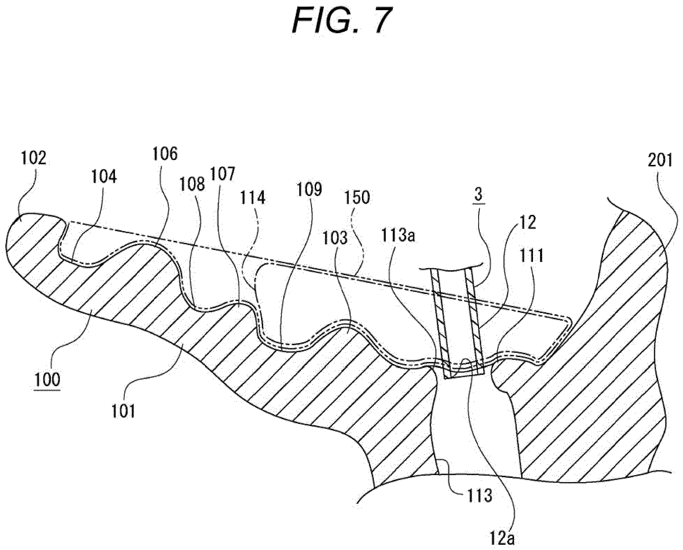

As illustrated in Fig. 5 and Fig. 6, the sound introduction hooks 3 and 3 are such that: the intermediate portions 13 and 13 are mounted on the root portions of the auricles 101 and 101, respectively, from the above; the connection portions 11 and 11 are positioned behind the auricles 101 and 101, respectively; and the bending portions 12 and 12 are positioned in front of the auricles 101 and 101, respectively. At this time, at least parts of the bending portions 12 and 12 are positioned in the internal spaces 150 and 150 of the auricles 101 and 101 in a state in which the bending portions 12 and 12 are not in contact with the auricles 101 and 101, respectively (see Fig. 6). At this time, the bending portions 12 and 12 are positioned so that the openings 12a and 12a may be positioned near the external acoustic meatuses 113a and 113a of the external auditory meatuses 113 and 113, respectively, without blocking the whole external acoustic meatuses 113a and 113a (see Fig. 6 and Fig. 7).

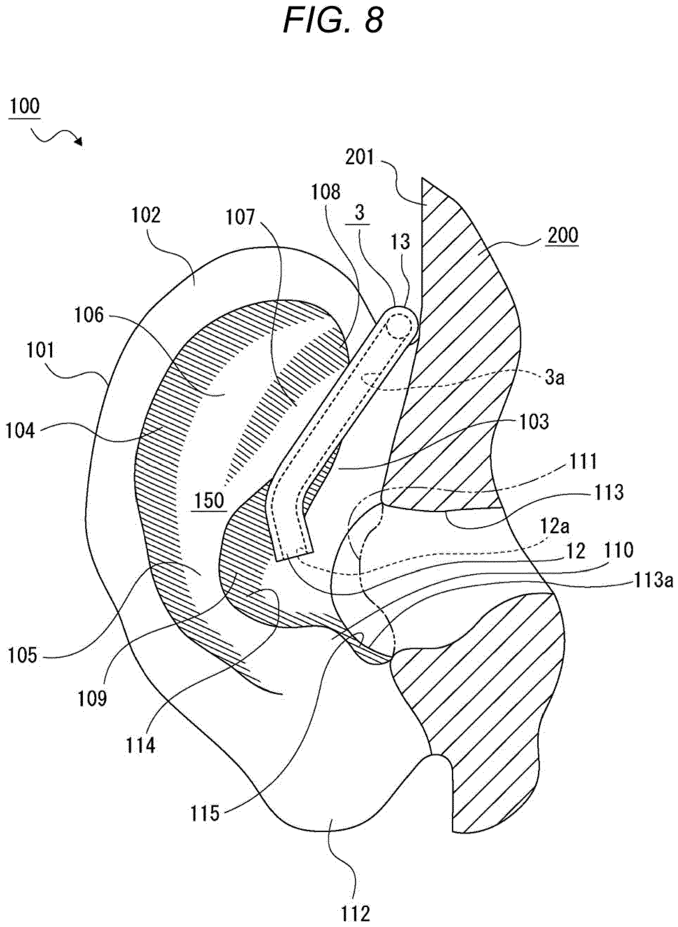

Note that, in a state in which the sound output device 1 is mounted on the head 200, the openings 12a and 12a of the bending portions 12 and 12 in the sound introduction hooks 3 and 3 may be positioned at the cavum conchae 114 and 114, respectively (see Fig. 8).

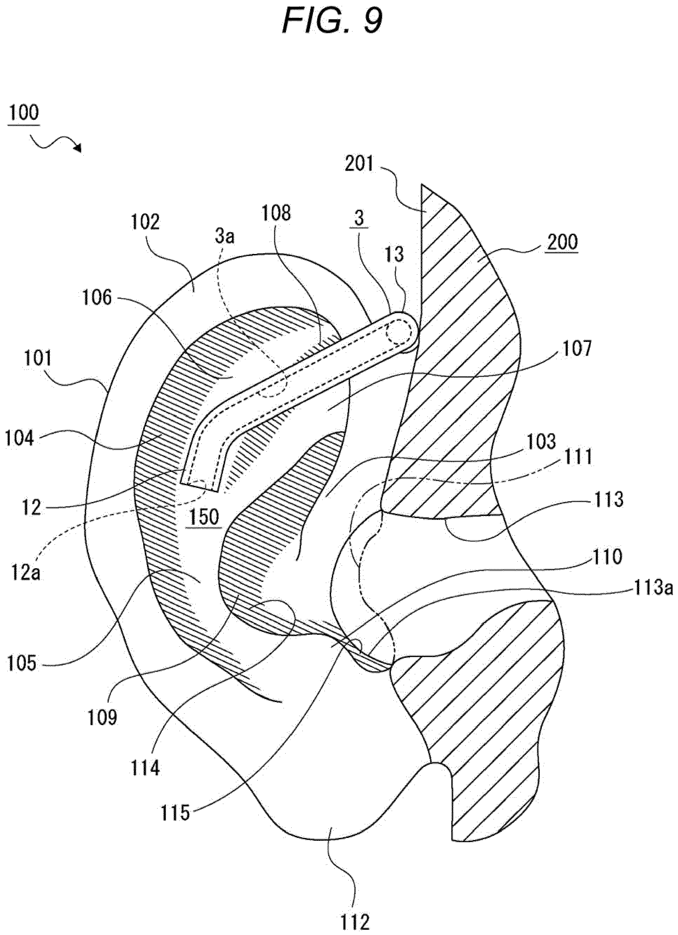

Further, the openings 12a and 12a of the bending portions 12 and 12 do not need to be positioned at the external auditory meatuses 113 and 113 or the cavum conchae 114 and 114, and the openings 12a and 12a may be positioned apart from the external auditory meatuses 113 and 113 and the cavum conchae 114 and 114 as long as the openings 12a and 12a are positioned in the internal spaces 150 and 150 of the auricles 101 and 101 (see Fig. 9).

Note that the openings 12a and 12a of the bending portions 12 and 12 may be positioned outside the internal spaces 150 and 150 of the auricles 101 and 101 depending on the shape or size of the ears 100 of the user.

As described above, in a state in which the sound output device 1 is mounted on the ears 100, the sound output device 1 is positioned in a state in which the housings 2 and 2 are in contact with the head 200 behind the auricles 101 and 101.

Therefore, the sound output device 1 is mounted on the ears 100 and 100 in a state in which the sound introduction hooks 3 and 3 and the housings 2 and 2 are in contact with the head 200, and therefore the sound output device 1 can be stably mounted on the ears 100 and 100.

Further, the sound introduction hooks 3 and 3 are such that the connection portions 11 and 11 are positioned behind the auricles 101 and 101, respectively, and the bending portions 12 and 12 are positioned in front of the connection portions 11 and 11, respectively.

Therefore, the housings 2 and 2 are positioned behind the auricles 101 and 101, and thus only parts of the sound introduction hooks 3 and 3 exist in front of the auricles 101 and 101. Therefore, it is possible to mount the sound output device 1 on the ears 100 and 100 without discomfort.

Furthermore, the housings 2 and 2 do not exist in front of the auricles 101 and 101, and therefore a size of structures existing in front of the auricles 101 and 101 is reduced and an influence upon the head-related transfer function is reduced. Thus, it is possible to restrain reduction in space perception ability.

In addition, in a case where the bending portions 12 and 12 are positioned in the vicinity of the external auditory meatuses 113 and 113 or near the external acoustic meatuses 113a and 113a of the external auditory meatuses 113 and 113, positions at which audio is emitted exist in the vicinity of the external auditory meatuses 113 and 113, and therefore it is possible to favorably hear audio.

Note that, in a state in which the sound output device 1 is mounted on the head 200 of the user, at least a part of the housing 2 is desirably positioned on a side of the earlobe 112 behind the auricle 101 (see Fig. 5).

Because at least a part of the housing 2 is positioned on the side of the earlobe 112 behind the auricle 101, the housing 2 is positioned on a lower end side of the ear 100 at the root portion of the auricle 101. Therefore, it is possible to stably mount the sound output device 1 on the head 200.

Further, in a state in which the sound output device 1 is mounted on the head 200 of the user, at least a part of the housing 2 may be positioned below a lower end of the earlobe 112 behind the auricle 101.

Because at least a part of the housing 2 is positioned below the lower end of the earlobe 112 behind the auricle 101, the housing 2 is positioned on the lower end side of the ear 100. Therefore, it is possible to stably mount the sound output device 1 on the head 200.

### [Another Example of Sound Output Device]

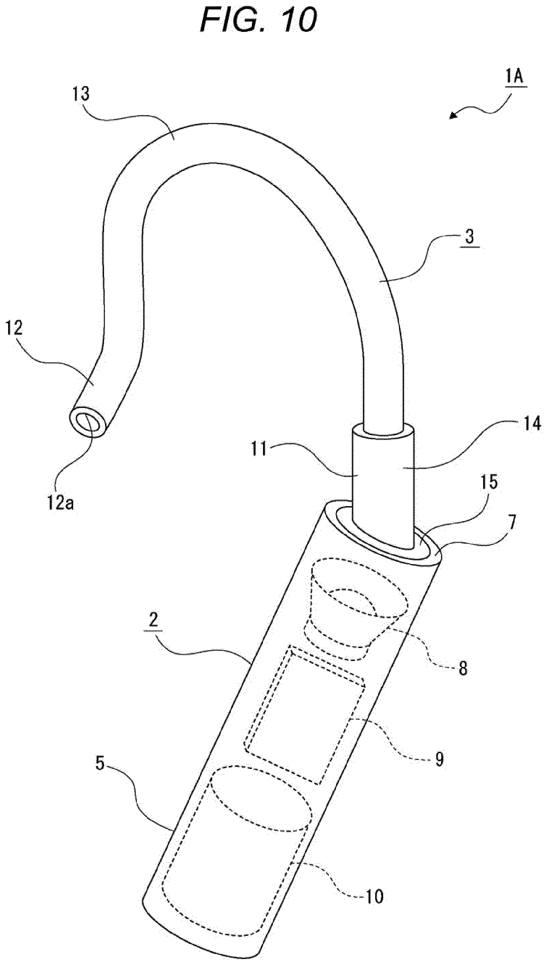

In the above description, an example of the sound output device 1 including the pair of the housings 2 and 2 and the pair of the sound introduction hooks 3 and 3 has been described. However, for example, it is also possible to use a sound output device 1A including one housing 2 and one sound introduction hook 3 as described below (see Fig. 10).

Note that the sound output device 1A described below is different from the sound output device 1 described above only in that the number of housings and the number of sound introduction hooks are different, a cable is not provided, and an internal structure of the housing is different. Therefore, only differences between the sound output device 1A and the sound output device 1 will be described in detail, and the other portions are denoted by the same reference signs as the reference signs denoting similar portions in the sound output device 1 and description thereof will be omitted.

The sound output device 1A includes one housing 2 and one sound introduction hook 3.

The speaker 8, the circuit board 9, and the battery 10 are arranged in the housing 2. Any of the circuit board 9 and the battery 10 may be arranged on the speaker 8 side. Power of the battery 10 is supplied to the speaker 8 and the circuit board 9 to drive the speaker 8 and the circuit board 9.

Note that, for example, various connection terminals such as a universal serial bus (USB) terminal and a charging terminal, an audio input hole for a microphone, and the like may be provided in the housing 2. In a case where a connection terminal is provided in the housing 2, a circuit corresponding to the connection terminal is arranged in the housing 2, and, in a case where an audio input hole for a microphone is provided in the housing 2, a microphone is arranged in the housing 2.

The housing 2 of the sound output device 1A is pushed against a root portion of the left or right auricle 101 of the head 200, i.e., a boundary portion between the auricle 101 and the temporal region 201 or a portion in the vicinity thereof from the back side of the auricle 101.

The sound introduction hook 3 is such that: the intermediate portion 13 is mounted on the root portion of the auricle 101 from the above; the connection portion 11 is positioned behind the auricle 101; and the bending portion 12 is positioned in front of the auricle 101. At this time, at least a part of the bending portion 12 is positioned in the internal space 150 of the auricle 101 in a state in which the bending portion 12 is not in contact with the auricle 101, and the opening 12a is positioned at the cavum conchae 114 or the external auditory meatus 113.

Note that the opening 12a of the bending portion 12 does not need to be positioned at the cavum conchae 114 or the external auditory meatus 113, and the opening 12a may be positioned apart from the external auditory meatus 113 and the cavum conchae 114 as long as the opening 12a is positioned in the internal space 150.

Note that the openings 12a and 12a of the bending portions 12 and 12 may be positioned outside the internal spaces 150 and 150 of the auricles 101 and 101 depending on the shape or size of the ear 100 of the user.

Further, not only in the sound output device 1 but also in the sound output device 1A, in a state in which the sound output device 1A is mounted on the head 200 of the user, at least a part of the housing 2 may be positioned on the side of the earlobe 112 behind the auricle 101 or may be positioned below the lower end of the earlobe 112 behind the auricle 101.

As described above, one housing 2 and one sound introduction hook 3 are provided in the sound output device 1A, and the battery 10 is arranged in the housing 2.

Therefore, it is possible to mount the sound introduction hook 3 on one ear 100 to use the sound output device 1A, and therefore it is possible to easily mount the sound output device 1A on the ear 100 and improve usability.

Further, because the sound output device 1A is mounted only on one ear 100, it is possible to reduce a load applied to the user when the sound output device 1A is mounted on the ear 100 and secure a favorable wearing feeling of the sound output device 1A.

### [Conclusion]

As described above, the sound output devices 1 and 1A include: the housing 2 in which the speaker 8 is arranged; and the sound introduction hook 3 in which the connection portion 11 serving as one endportion is connected to the housing 2 and audio introduced through the sound introduction space 3a is emitted through the opening 12a of the bending portion 12 serving as the other end portion, and the sound introduction hook is mounted on a root portion of the auricle 101 and the bending portion 12 is not in contact with the ear 100.

Therefore, audio output from the speaker 8 is transmitted to the user via the sound introduction hook 3 and the sound introduction hook 3 is mounted in a state in which the bending portion 12 serving as the other end portion of the sound introduction hook 3 is not in contact with the ear 100, and thus it is possible to secure favorable recognizability of audio output from the speaker 8 and external sound and reduce discomfort caused in a mounted state.

In particular, in the sound output devices 1 and 1A, audio output from the speaker 8 is introduced through the sound introduction space 3a of the sound introduction hook 3 and is recognized, and a bone conduction method in which vibration is transmitted to an ear bone to recognize audio is not employed. Therefore, reproducibility of a lower frequency band in an audio region is increased, and a low-pitched sound is easily heard.

Further, the bending portion 12 serving as the other end portion of the sound introduction hook 3 is not configured to block the external auditory meatus 113, and therefore it is possible to secure favorable reproducibility of low-pitched sound. In addition, the head-related transfer function is hardly changed, and therefore it is possible to accurately recognize external sound.

Furthermore, in a case where the opening 12a of the bending portion 12 is positioned in the internal space 150 of the auricle 101 in a state in which the sound output device 1 or 1A is mounted on the head 200, the opening 12a is positioned in the vicinity of the external auditory meatus 113, and therefore it is possible to secure favorable recognizability of audio output from the speaker 8 and external sound.

Further, in a case where the opening 12a of the bending portion 12 is positioned at the cavum conchae 114 in a state in which the sound output device 1 or 1A is mounted on the head 200, the opening 12a is positioned closer to the external auditory meatus 113, and therefore it is possible to secure further favorable recognizability of audio output from the speaker 8 and external sound.

Furthermore, in a case where the opening 12a of the bending portion 12 is positioned at the external auditory meatus 113 in a state in which the sound output device 1 or 1A is mounted on the head 200, the opening 12a is positioned in the vicinity of the eardrum, and therefore it is possible to secure still further favorable recognizability of audio output from the speaker 8 and external sound.

Still further, in the sound output devices 1 and 1A, the bending portion 12 of the sound introduction hook 3 is bent in a direction in which the bending portion 12 is closer to the external auditory meatus 113 than the other portions. Therefore, when the sound introduction hook 3 is mounted on the ear 100, a position at which audio is emitted spontaneously exists in the vicinity of the external auditory meatus 113, and thus audio can be favorably heard.

In addition, in the sound output devices 1 and 1A, the sound introduction hook 3 is inclined to the temporal region 201 side from the housing 2, and therefore the sound introduction hook 3 is in contact with the temporal region 201 when the sound introduction hook 3 is mounted on the ear 100. Thus, it is possible to stably mount the sound output device 1 or 1A on the ear 100.

### [Present technology]

The present technology can have the following configurations.

(1) A sound output device including:
   a housing in which a speaker is arranged; and
   a sound introduction hook in which an internal space is provided as a sound introduction space for introducing audio output from the speaker, one end portion is connected to the housing, and audio introduced through the sound introduction space is emitted through an opening of the other end portion,
   wherein the sound introduction hook is mounted on a root portion of an auricle, and
   the other end portion of the sound introduction hook is not in contact with an ear.
(2) The sound output device according to (1), wherein
   the opening is positioned in an internal space of the auricle.
(3) The sound output device according to (1), wherein
   the opening is positioned at a cavum conchae.
(4) The sound output device according to (1), wherein
   the opening is positioned at an external auditory meatus.
(5) The sound output device according to any of (1) to (4), wherein
   the housing is positioned behind the auricle in a state in which the housing is in contact with a head.
(6) The sound output device according to (5) described above, wherein
   the one end portion is positioned behind the auricle and the other end portion is positioned in front of the one end portion.
(7) The sound output device according to any of (1) to (6), wherein the sound introduction hook is rotatable with respect to the housing around an axis of the housing.
(8) The sound output device according to any of (1) to (7), wherein the sound introduction hook is bendable.
(9) The sound output device according to any of (1) to (8), wherein the sound introduction hook is bent in a direction in which the other end portion is closer to the external auditory meatus than the other portions.
(10) The sound output device according to any of (1) to (9), wherein the sound introduction hook is inclined to a temporal region side from the housing.
(11) The sound output device according to any of (1) to (10), wherein
   a pair of the housings and a pair of the sound introduction hooks are provided, and
   the speaker is arranged in each of the pair of the housings.
(12) The sound output device according to (11), wherein
   a circuit board is arranged in one of the housings, and
   a battery is arranged in the other one of the housings.
(13) The sound output device according to (11) or (12), wherein
   a cable is connected between the pair of the housings.
(14) The sound output device according to any of (1) to (10), wherein
   the single housing and the single sound introduction hook are provided, and
   a battery is arranged in the housing.
(15) The sound output device according to any of (1) to (14), wherein
   in a case where the sound output device is mounted on a user, at least a part of the housing is positioned behind the auricle on a side of an earlobe.
(16) The sound output device according to any of (1) to (15), wherein
   in a case where the sound output device is mounted on a user, at least a part of the housing is positioned behind the auricle below a lower end of an earlobe.

### REFERENCE SIGNS LIST

- 200: Head
- 201: Temporal region
- 100: Ear
- 101: Auricle
- 112: Earlobe
- 150: Internal space
- 113: External auditory meatus
- 114: Cavum conchae
- 1: Sound output device
- 2: Housing
- 3: Sound introduction hook
- 3a: Sound introduction space
- 4: Cable
- 8: Speaker
- 9: Circuit board
- 10: Battery
- 11: Connection portion (one end portion)
- 12: Bending portion (the other end portion)
- 12a: Opening
- 1A: Sound output device

## Claims

1. A sound output device comprising:
a housing in which a speaker is arranged; and
a sound introduction hook in which an internal space is provided as a sound introduction space for introducing audio output from the speaker, one end portion is connected to the housing, and audio introduced through the sound introduction space is emitted through an opening of the other end portion,
wherein the sound introduction hook is mounted on a root portion of an auricle, and
the other end portion of the sound introduction hook is not in contact with an ear.

2. The sound output device according to claim 1, wherein
the opening is positioned in an internal space of the auricle.

3. The sound output device according to claim 1, wherein
the opening is positioned at a cavum conchae.

4. The sound output device according to claim 1, wherein
the opening is positioned at an external auditory meatus.

5. The sound output device according to claim 1, wherein
the housing is positioned behind the auricle in a state in which the housing is in contact with a head.

6. The sound output device according to claim 5, wherein
the one end portion is positioned behind the auricle and the other end portion is positioned in front of the one

7. The sound output device according to claim 1, wherein
the sound introduction hook is rotatable with respect to the housing around an axis of the housing.

8. The sound output device according to claim 1, wherein
the sound introduction hook is bendable.

9. The sound output device according to claim 1, wherein
the sound introduction hook is bent in a direction in which the other end portion is closer to the external auditory meatus than the other portions.

10. The sound output device according to claim 1, wherein
the sound introduction hook is inclined to a temporal region side from the housing.

11. The sound output device according to claim 1, wherein
a pair of the housings and a pair of the sound introduction hooks are provided, and
the speaker is arranged in each of the pair of the housings.

12. The sound output device according to claim 11, wherein
a circuit board is arranged in one of the housings, and
a battery is arranged in the other one of the housings.

13. The sound output device according to claim 11, wherein
a cable is connected between the pair of the housings.

14. The sound output device according to claim 1, wherein
the single housing and the single sound introduction hook are provided, and
a battery is arranged in the housing.

15. The sound output device according to claim 1, wherein
in a case where the sound output device is mounted on a user, at least a part of the housing is positioned behind the auricle on a side of an earlobe.

16. The sound output device according to claim 1, wherein
in a case where the sound output device is mounted on a user, at least a part of the housing is positioned behind the auricle below a lower end of an earlobe.
